# EUROPEAN PATENT APPLICATION

(11) **EP 4 147 927 A1**
(43) Date of publication of application: **15.03.2023**
(21) Application number: 20942507.3
(22) Date of filing: 03.07.2020
(51) Int. Cl.: B60T 13/14, B60T 13/68

(54) **PEDAL FEEL ADJUSTMENT DEVICE AND CONTROL METHOD**

(71) Applicant: Huawei Technologies Co., Ltd., Longgang District, Shenzhen, Guangdong 518129 (CN)
(72) Inventor: WANG, Xing, Shenzhen, Guangdong 518129 (CN); YING, Zhuofan, Shenzhen, Guangdong 518129 (CN); LIU, Fengyu, Shenzhen, Guangdong 518129 (CN)
(74) Representative: Isarpatent
(86) International application number: PCT/CN2020/100041
(87) International publication number: WO 2022/000444

(57) **Abstract**

Embodiments of this application disclose a pedal feeling adjustment apparatus, including: a pedal assembly, a main cylinder assembly, a first flow adjustment assembly, an electronic control unit ECU, and a liquid storage kettle. The main cylinder assembly includes a main cylinder body, a first piston is disposed in the main cylinder body, the first piston divides the main cylinder body into a first chamber and a second chamber, the first chamber and the second chamber are two chambers that are not connected, the first piston is connected to one end of a push rod of the main cylinder assembly, the other end of the push rod is connected to the pedal assembly through the second chamber, a first liquid through outlet of the first chamber is connected to one end of the first flow adjustment assembly, the other end of the first flow adjustment assembly is connected to a liquid outlet of the liquid storage kettle, and the ECU is electrically connected to the first flow adjustment assembly, to control opening of the first flow adjustment assembly. The solution provided in this application can be used to adjust a pedal feeling, and improve driving experience.

## Description

### TECHNICAL FIELD

This application relates to the field of vehicle braking technologies, and in particular, to a pedal feeling adjustment apparatus and a control method.

### BACKGROUND

When a new energy vehicle decelerates or brakes, a part of mechanical energy of the vehicle may be converted into electric energy by using a motor and the electric energy is stored in a battery, and a part of braking force is generated to implement deceleration or braking of the vehicle. When the vehicle accelerates again, the motor reconverts energy stored in the battery into kinetic energy for driving of the vehicle. Due to a series of limitations such as single shaft braking and low braking strength on regenerative braking of the motor, not all braking conditions can be met. Therefore, a conventional hydraulic brake remains in the new energy vehicle.

Stepping on a pedal is a first step for running an electro-hydraulic brake. A pedal feeling, namely, a feeling generated by a driver when stepping on a brake pedal, is an important part of driving experience. Each driver has a familiar pedal feeling. However, a pedal feeling in a brake system in the conventional technology is usually set before delivery and cannot be adjusted. As a result, driving experience is affected.

### SUMMARY

This application provides a pedal feeling adjustment apparatus and a control method, to adjust a pedal feeling and improve driving experience of a driver.

To resolve the foregoing technical problems, embodiments of this application provide the following technical solutions.

A first aspect of this application provides a pedal feeling adjustment apparatus, including: a pedal assembly, a main cylinder assembly, a first flow adjustment assembly, an electronic control unit ECU, and a liquid storage kettle. The main cylinder assembly includes a main cylinder body, a first piston is disposed in the main cylinder body, the first piston divides the main cylinder body into a first chamber and a second chamber, the first chamber and the second chamber are two chambers that are not connected, the first piston is connected to one end of a push rod of the main cylinder assembly, and the other end of the push rod is connected to the pedal assembly through the second chamber. Volumes of the first chamber and the second chamber are changeable. For example, when a driver steps on a pedal, a volume of the first chamber decreases and a volume of the second chamber increases; and when the pedal returns, for example, when the driver releases the pedal, the volume of the second chamber increases and the volume of the first chamber decreases. A first liquid through outlet of the first chamber is connected to one end of the first flow adjustment assembly, the other end of the first flow adjustment assembly is connected to a liquid outlet of the liquid storage kettle, and the ECU is electrically connected to the first flow adjustment assembly, to control opening of the first flow adjustment assembly. For example, it is assumed that when the ECU controls the opening of the first flow adjustment assembly to be 0, liquid in the first chamber cannot enter the liquid storage kettle through the first flow adjustment assembly; and when 109 controls the opening of the first flow adjustment assembly to be maximum, the liquid in the first chamber can enter the liquid storage kettle absolutely through the first flow adjustment assembly. It can be learned from the first aspect that, in the pedal feeling adjustment apparatus provided in this embodiment of this application, the ECU can control the opening of the first flow adjustment assembly, to further simulate different pedal feelings. For example, after the driver steps on the pedal, the first piston and the first flow adjustment assembly may be considered as pedal simulators, or the first piston, a first spring, and the first flow adjustment assembly may be considered as pedal simulators. Specifically, according to deduction of Bernoulli's equation, when liquid is at an equal height, higher flow velocity indicates lower pressure. In the solution provided in this application, flow velocity can be controlled by using the first flow adjustment assembly. Pressure indicates force acting on the pedal, and may be specifically force exerted when the driver steps on the pedal. When a pedal feeling needs to be hard, the opening of the first flow adjustment assembly can be controlled to be smaller; and when the pedal feeling needs to be soft, the opening of the first flow adjustment assembly can be controlled to be larger.

Optionally, with reference to the first aspect, in a first possible implementation, the pedal feeling adjustment apparatus further includes a booster cylinder assembly and a second flow adjustment assembly. A second liquid through outlet of the first chamber is connected to one end of the second flow adjustment assembly, and the other end of the second flow adjustment assembly is connected to a first liquid through outlet of the booster cylinder assembly. The ECU can control opening of the second flow adjustment assembly, and can adjust a pedal returning speed. It can be learned from the first possible implementation of the first aspect that, the ECU can control the opening of the second flow adjustment assembly, so that liquid in the booster cylinder assembly flows into flows in the first chamber, thereby further adjusting the pedal returning speed. For example, when the pedal needs to be quickly returned, the opening of the second flow adjustment assembly may be controlled to be larger, so that the liquid from the booster cylinder assembly quickly flows into the first chamber, and a pressure difference between the first chamber and the second chamber becomes larger, thereby facilitating quick return of the pedal.

Optionally, with reference to the first aspect or the first possible implementation of the first aspect, in a second possible implementation, the pedal feeling adjustment apparatus further includes a third flow adjustment assembly. One end of the third flow adjustment assembly is connected to a first liquid through outlet of the second chamber, and the other end of the third flow adjustment assembly is connected to a second liquid through outlet of the booster cylinder assembly. The ECU can control opening of the third flow adjustment assembly. It can be learned from the second possible implementation of the first aspect that, the ECU can control the opening of the third flow adjustment assembly to control the pedal returning speed. For example, the ECU may control the opening of the third flow adjustment assembly based on pressure fed back from the first chamber, and adjust the pressure difference between the first chamber and the second chamber, thereby controlling the pedal returning speed.

Optionally, with reference to the second possible implementation of the first aspect, in a third possible implementation, the second liquid through outlet of the booster cylinder assembly is the same as the first liquid through outlet of the booster cylinder assembly. It can be learned from the third possible implementation of the first aspect that, a simplified structure is provided, and diversity of the solution is increased.

Optionally, with reference to the second possible implementation of the first aspect, in a fourth possible implementation, the pedal feeling adjustment apparatus further includes a fourth flow adjustment assembly. One end of the fourth flow adjustment assembly is connected to a liquid outlet of the oil can, and the other end of the fourth flow adjustment assembly is connected to a second liquid through outlet of the second chamber. The ECU can control opening of the fourth flow adjustment assembly. It can be learned from the fourth possible implementation of the first aspect that the ECU can control the opening of the third flow adjustment assembly and the opening of the fourth flow adjustment assembly to more accurately control pressure in the second chamber, and further more accurately adjust the pressure difference between the first chamber and the second chamber, thereby more accurately controlling the pedal returning speed.

Optionally, with reference to the first aspect or the first to the fourth possible implementation of the first aspect, in a fifth possible implementation, the first flow adjustment assembly includes an electronically controlled proportional valve, one end of the electronically controlled proportional valve is connected to the first liquid through outlet of the first chamber, and the other end of the electronically controlled proportional valve is connected to the liquid storage kettle. It can be learned from the fifth possible implementation of the first aspect that, a specific structure of the first flow adjustment assembly is provided, and diversity of the solution is increased.

Optionally, with reference to the fifth possible implementation of the first aspect, in a sixth possible implementation, the first flow adjustment assembly further includes an electronically controlled throttling valve, the electronically controlled throttling valve and the electronically controlled proportional valve are connected in parallel, one end of a structure in which the electronically controlled throttling valve and the electronically controlled proportional valve are connected in parallel is connected to the first liquid through outlet of the first chamber, and the other end of the structure in which the electronically controlled throttling valve and the electronically controlled proportional valve are connected in parallel is connected to the liquid storage kettle. It can be learned from the sixth possible implementation of the first aspect that, a specific structure of the first flow adjustment assembly is provided, and diversity of the solution is increased. In addition, the electronically controlled throttling valve and the electronically controlled proportional valve can further implement a function of mutual backup. This ensures that the solution provided in this application can work stably and normally.

Optionally, with reference to the fifth possible implementation of the first aspect, in a seventh possible implementation, the first flow adjustment assembly further includes a first one-way valve, the first one-way valve, an electronically controlled throttling valve, and the electronically controlled proportional valve are connected in parallel, one end of a structure in which the first one-way valve, the electronically controlled throttling valve, and the electronically controlled proportional valve are connected in parallel is connected to the first liquid through outlet of the first chamber, the other end of the structure in which the first one-way valve, the electronically controlled throttling valve, and the electronically controlled proportional valve are connected in parallel is connected to the liquid storage kettle, and a conduction direction of the first one-way valve is a direction from the liquid storage kettle to the first chamber. It can be learned from the seventh possible implementation of the first aspect that, a specific structure of the first flow adjustment assembly is provided, and diversity of the solution is increased.

Optionally, with reference to the first aspect or the first to the sixth possible implementation of the first aspect, in an eighth possible implementation, a fifth flow adjustment assembly is further included. The other end of the first flow adjustment assembly is connected to the liquid outlet of the liquid storage kettle by using the fifth flow adjustment assembly.

Optionally, with reference to the first aspect or the first to the eighth possible implementation of the first aspect, in a ninth possible implementation, the booster cylinder assembly includes a booster cylinder body, a second piston is disposed in the booster cylinder body, the second piston divides the booster cylinder body into a third chamber and a fourth chamber, the third chamber and the fourth chamber are two chambers that are not connected, and the third chamber is connected to the first chamber. It can be learned from the ninth possible implementation of the first aspect that, the third chamber is connected to the first chamber, so that braking without assistance can be implemented.

Optionally, with reference to the ninth possible implementation of the first aspect, in a tenth possible implementation, a first spring is disposed in the main cylinder body, one end of the first spring is connected to the first piston, the other end of the first spring is connected to the second piston, a second spring is disposed in the booster cylinder body, one end of the second spring is connected to the second piston, the other end of the second spring is connected to a third piston in the booster cylinder assembly, and the third piston is driven by a motor in the booster cylinder assembly.

Optionally, with reference to the tenth possible implementation of the first aspect, in an eleventh possible implementation, rigidity of the first spring is less than rigidity of the second spring.

A second aspect of this application provides a control method, including: An electronic control unit ECU obtains a braking signal. The ECU controls opening of a first flow adjustment assembly based on the braking signal, where one end of the first flow adjustment assembly is connected to a first liquid through outlet of a first chamber of a main cylinder assembly, the other end of the first flow adjustment assembly is connected to a liquid outlet of a liquid storage kettle, a main cylinder body of the main cylinder assembly is divided into the first chamber and a second chamber by using a piston disposed in the main cylinder body, the first chamber and the second chamber are two seal chambers that are not connected, the piston is connected to one end of a push rod of the main cylinder assembly, and the other end of the push rod passes through the second chamber and is connected to a pedal assembly.

Optionally, with reference to the second aspect, in a first possible implementation, the method further includes: The ECU obtains a pedal returning signal. The ECU controls opening of a second flow adjustment assembly based on the pedal returning signal, where one end of the second flow adjustment assembly is connected to a second liquid through outlet of the first chamber, and the other end of the second flow adjustment assembly is connected to a first liquid through outlet of a booster cylinder assembly.

Optionally, with reference to the second aspect or the first possible implementation of the second aspect, in a second possible implementation, the method further includes: The ECU controls opening of a third flow adjustment assembly based on the pedal returning signal, where one end of the third flow adjustment assembly is connected to a first liquid through outlet of the second chamber, and the other end of the third flow adjustment assembly is connected to a second liquid through outlet of the booster cylinder assembly.

Optionally, with reference to the second possible implementation of the second aspect, in a third possible implementation, the method further includes: The ECU controls opening of a fourth flow adjustment assembly based on the pedal returning signal, where one end of the fourth flow adjustment assembly is connected to a liquid outlet of the oil can, and the other end of the fourth flow adjustment assembly is connected to a second liquid through outlet of the second chamber.

Optionally, with reference to the second aspect, in a fourth possible implementation, the method further includes: The ECU controls, when the ECU learns that a booster cylinder assembly cannot establish pressure, a fifth flow adjustment assembly, a second flow adjustment assembly, and a third flow adjustment assembly to be switched off, where one end of the fifth flow adjustment assembly is connected to the other end of the first flow adjustment assembly, the other end of the fifth flow adjustment assembly is connected to the liquid outlet of the liquid storage kettle, one end of the second flow adjustment assembly is connected to a second liquid through outlet of the first chamber, the other end of the second flow adjustment assembly is connected to a first liquid through outlet of the booster cylinder assembly, one end of the third flow adjustment assembly is connected to a liquid through outlet of the second chamber, and the other end of the third flow adjustment assembly is connected to a second liquid through outlet of the booster cylinder assembly.

Optionally, with reference to the second aspect, in a fifth possible implementation, the method further includes: The ECU controls, when the ECU obtains an emergency braking signal, the first flow adjustment assembly to be switched off.

Optionally, with reference to the fifth possible implementation of the second aspect, in a sixth possible implementation, the method further includes: The ECU controls, when the ECU obtains the emergency braking signal, a fifth flow adjustment assembly to be switched off, where one end of the fifth flow adjustment assembly is connected to the other end of the first flow adjustment assembly, and the other end of the fifth flow adjustment assembly is connected to the liquid outlet of the liquid storage kettle.

Optionally, with reference to the second aspect or the first to the sixth possible implementation of the second aspect, in a seventh possible implementation, that the ECU obtains the braking signal includes: The ECU receives a displacement signal obtained by a pedal travel sensor in the pedal assembly. The ECU determines the braking signal based on the displacement signal.

The technical solution provided in this application can be used to adjust a pedal feeling, and improve driving experience of a driver.

### BRIEF DESCRIPTION OF DRAWINGS

FIG. 1 is a schematic diagram of a structure of a pedal feeling adjustment apparatus according to an embodiment of this application;
FIG. 2 is a schematic diagram of another structure of a pedal feeling adjustment apparatus according to an embodiment of this application;
FIG. 3 is a schematic diagram of another structure of a pedal feeling adjustment apparatus according to an embodiment of this application;
FIG. 4 is a schematic diagram of another structure of a pedal feeling adjustment apparatus according to an embodiment of this application;
FIG. 5 is a schematic diagram of another structure of a pedal feeling adjustment apparatus according to an embodiment of this application;
FIG. 6 is a schematic diagram of another structure of a pedal feeling adjustment apparatus according to an embodiment of this application;
FIG. 7 is a schematic diagram of another structure of a pedal feeling adjustment apparatus according to an embodiment of this application;
FIG. 8 is a schematic flowchart of a control method according to an embodiment of this application;
FIG. 9 is another schematic flowchart of a control method according to an embodiment of this application;
FIG. 10 is a schematic diagram of a structure of a brake system according to an embodiment of this application;
FIG. 11 is another schematic flowchart of a control method according to an embodiment of this application;
FIG. 12 is a schematic diagram of an application scenario according to an embodiment of this application;
FIG. 13a is a schematic flowchart of a control method according to an embodiment of this application;
FIG. 13b is a schematic flowchart of a control method according to an embodiment of this application;
FIG. 14 is a schematic diagram of an application scenario of a pedal feeling adjustment apparatus according to this application;
FIG. 15 is a schematic diagram of another application scenario of a pedal feeling adjustment apparatus according to this application;
FIG. 16 is a schematic diagram of another application scenario of a pedal feeling adjustment apparatus according to this application;
FIG. 17 is a schematic diagram of another application scenario of a pedal feeling adjustment apparatus according to this application;
FIG. 18 is a schematic diagram of another application scenario of a pedal feeling adjustment apparatus according to this application;
FIG. 19 is a schematic diagram of another application scenario of a pedal feeling adjustment apparatus according to this application; and
FIG. 20 is a schematic diagram of a structure of a vehicle according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may learn that the technical solutions provided in embodiments of this application are also applicable to a similar technical problem as a technology evolves and a new scenario emerges.

In the specification, claims, and accompanying drawings of this application, the terms "first", "second", and the like are intended to distinguish between similar objects but do not necessarily indicate a specific order or sequence. It should be understood that data termed in such a way is interchangeable in appropriate circumstances, so that embodiments described herein can be implemented in other orders than the content illustrated or described herein. In addition, terms "include" and "have" and any variations thereof are intended to cover non-exclusive inclusions, for example, a process, method, system, product, or device including a series of steps or modules need not be limited to those clearly listed steps or modules, but may include other steps or modules that are not clearly listed or are inherent to these processes, methods, products, or devices. Naming or numbering of steps in this application does not mean that steps in the method procedure need to be performed according to a time/logical order indicated by the naming or numbering. An execution order of process steps that have been named or numbered may be changed based on a technical objective to be implemented, provided that a same or similar technical effect can be achieved. Division into the modules in this application is logical division. In actual application, there may be another division manner. For example, a plurality of modules may be combined or integrated into another system, or some features may be ignored or not performed. In addition, the displayed or discussed mutual coupling or direct coupling or communication connection may be through some ports, and the indirect coupling or communication connection between modules may be in an electrical form or another similar form. This is not limited in this application. In addition, modules or submodules described as separate components may or may not be physically separated, may or may not be physical modules, or may be distributed to a plurality of circuit modules. Some or all of the modules may be selected according to an actual requirement to implement the objectives of the solutions of this application.

In this application, unless otherwise specified and limited, the terms such as "mount", "link", "connect", "fasten", and "dispose" should be understood broadly. For example, the term "connect" may be a fixed connection, may be a detachable connection, or may be integration; may be a mechanical connection or may be an electrical connection; or may be a direct connection, may be an indirect connection implemented by using an intermediate medium, or may be communication inside two elements or an interaction relationship between two elements. A person of ordinary skill in the art may interpret specific meanings of the foregoing terms in this application based on specific cases.

A brake system, as one of the important parts of a vehicle, is directly related to comprehensive performance of the vehicle and security of life and property. The brake system of the vehicle has undergone several changes and improvements, from leather friction braking to drum and disc brakes, then mechanical anti-lock brake system, and analog electronic anti-lock brake systems with the development of electronics technologies. Research on a brake-by-wire (brake-by-wire, BBW) system emerges in recent years.

The brake-by-wire system includes an electro-hydraulic brake (electro-hydraulic brake, EHB) and an electro-mechanical brake (electro-mechanical brake, EMB). The EHB, developed on the basis of a conventional hydraulic brake, is braked through driving a hydraulic system by a motor. Compared with the EMB, the EHB remains a hydraulic mechanical brake system as a backup, and can still ensure brake security of the vehicle when an electronic control unit is faulty. Currently, the EHB has become one of the research hotspots in the development of the brake systems of vehicles.

A vehicle in the solutions provided in this application may be a new energy vehicle or another vehicle using the EHB. When a new energy vehicle decelerates or brakes, a part of mechanical energy of the vehicle may be converted into electric energy by using a motor and the electric energy is stored in a battery, and a part of braking force is generated to implement deceleration or braking of the vehicle. When the vehicle accelerates again, the motor reconverts energy stored in the battery into kinetic energy for driving of the vehicle. Due to a series of limitations such as single shaft braking and low braking strength on regenerative braking of the motor, not all braking conditions can be met. Therefore, a conventional hydraulic brake remains in the new energy vehicle.

A brake pedal feeling, namely, a feeling generated by a driver when stepping on a brake pedal, is an important part of driving experience. Stepping on a pedal is a first step for running the electro-hydraulic brake. Each driver has a familiar brake pedal feeling. A pedal feeling in a brake system in the conventional technology is usually set before delivery and cannot be adjusted, and brake pedal feelings are different in different vehicle models. In addition, when a driver changes a driving vehicle, a brake pedal feeling changes accordingly. As a result, the driver feels uncomfortable, driving experience is affected, and even driving safety is affected. For example, when the pedal feeling is very soft, the driver only wants to decelerate, but because the pedal is very soft, displacement of the brake pedal is very large when the driver steps on the brake pedal with a pedal force A. The system determines brake intent of the driver is emergency braking and performs an emergency braking action. Emergency braking causes impact on the driver and a passenger. Further, accidents such as rear-end collision may occur due to emergency braking, which is not conducive to driving security and comfort of the driver Likewise, when the pedal feeling is very hard, the driver only wants to brake in emergency, but because the brake pedal feeling is very hard, displacement of the brake pedal is very small when the driver steps on the brake pedal with a pedal force A. The system determines that brake intent of the driver is decelerating and performs braking deceleration based on the displacement of the brake pedal. The system does not perform emergency braking based on the real intent of the driver, and the vehicle still travels at a specific speed. As a result, collision accidents may occur with a vehicle ahead. For another example, different people have different pedal feelings. For example, when a driver with high strength (for example, a young driver) may want to decelerate, and a driver with low strength (for example, an old driver) may want to brake, displacement of the brake pedal is a same distance. If the pedal feeling cannot be adjusted, driving experience of the driver is affected.

Based on the foregoing problems, this application provides a pedal feeling adjustment apparatus. According to the solution provided in this application, opening of a solenoid valve is controlled by using an electronic control unit (electronic control unit, ECU), and a pedal feeling is simulated and adjusted through cooperation between the solenoid valve and a related component. The following describes in detail the pedal feeling adjustment apparatus provided in this application.

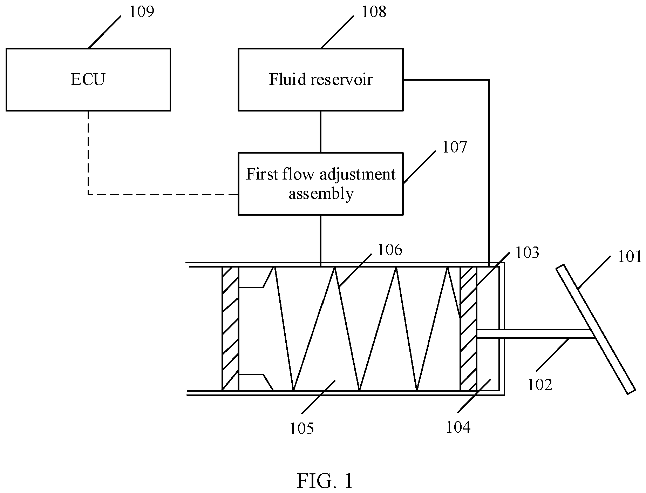

FIG. 1 is a schematic diagram of a structure of a pedal feeling adjustment apparatus according to an embodiment of this application.

As shown in FIG. 1, the pedal feeling adjustment apparatus provided in the embodiment of this application may include: a pedal assembly, a main cylinder assembly, a first flow adjustment assembly 107, an electronic control unit ECU 109, and a liquid storage kettle 108.

The main cylinder assembly includes a main cylinder body, a first piston 103 is disposed in the main cylinder body, the first piston 103 divides the main cylinder body into a first chamber 105 and a second chamber 104, and the first chamber 105 and the second chamber 104 are two chambers that are not connected. The second chamber 104 is a chamber close to a side of a pedal assembly, and the first chamber 105 is a chamber away from the side of the pedal assembly. The first chamber 105 and the second chamber 104 are liquid chambers, and both the first chamber 105 and the second chamber 104 are filled with liquid. The first piston 103 is connected to one end of a push rod 102 of the main cylinder assembly, and the other end of the push rod 102 is connected to the pedal assembly through the second chamber 104. Volumes of the first chamber 105 and the second chamber 104 are changeable. For example, when a driver steps on a pedal 101, a volume of the first chamber 105 decreases and a volume of the second chamber 104 increases; and when the pedal returns, for example, when the driver releases the pedal, the volume of the second chamber 105 increases and the volume of the first chamber 104 decreases. It should be noted that the pedal is sometimes referred to as a brake pedal in this application. When a difference between the pedal and the brake pedal is not emphasized, the pedal and the brake pedal have a same meaning. In the first chamber 105 and the second chamber 104, a first liquid through outlet of the first chamber 105 is connected to one end of the first flow adjustment assembly 107, and the other end of the first flow adjustment assembly 107 is connected to a liquid outlet of the liquid storage kettle 108. In other words, the first chamber 105 and the liquid storage kettle 108 are connected through a pipeline (which may also be referred to as a pipe or an oil line, and a name is not limited in this embodiment of this application). The first flow adjustment assembly 107 is disposed on the pipeline between the first chamber 105 and the liquid storage kettle 108, and is configured to adjust an oil flow in the pipeline between the first chamber 105 and the liquid storage kettle 108. It should be noted that the liquid storage kettle 108 is sometimes referred to as an oil can in this application. When a difference between the liquid storage kettle and the oil can is not emphasized, the liquid storage kettle and the oil can have a same meaning. It should be noted that, the flow adjustment assembly is sometimes referred to as an adjustment assembly for short in this application. For example, the first flow adjustment assembly 107 is referred to as a first adjustment assembly for short. When a difference between the first flow adjustment assembly and the first adjustment assembly is not emphasized, the first flow adjustment assembly and the first adjustment assembly have a same meaning. The main cylinder body is also sometimes referred to as a main cylinder for short in this application. When a difference between the main cylinder body and the main cylinder is not emphasized, the main cylinder body and the main cylinder have a same meaning. The ECU 109 is electrically connected to the first flow adjustment assembly 107, and controls opening of the first flow adjustment assembly 107. The opening of the first flow adjustment assembly 107 is used to indicate a flow of liquid entering the first flow adjustment assembly 107. For example, it is assumed that opening A represents full closing, and opening B represents full opening. When the ECU 109 controls the opening of the first flow adjustment assembly 107 to be A, liquid in the first chamber 105 cannot enter the liquid storage kettle 108 through the first flow adjustment assembly 107. When the ECU 109 controls the opening of the first flow adjustment assembly 107 to be B, the liquid in the first chamber 105 can enter the liquid storage kettle 108 absolutely through the first flow adjustment assembly 107. For another example, it is assumed that the opening of the first flow adjustment assembly 107 is in a linear relationship with a flow. When the opening of the first flow adjustment assembly 107 is B, liquid with a flow C is allowed to pass through. When the opening of the first flow adjustment assembly 107 is D, liquid with a flow CD/B is allowed to pass through. In a possible implementation, a first spring 106 is disposed in the first chamber 105. The first spring 106 may be a return spring. Two ends of the first spring 106 are connected to opposite side walls of the first chamber 105 respectively. One of the opposite side walls is the first piston 103. In this way, under the action of the pedal, when the push rod 102 displaces, the first piston 103 moves and compresses the first spring 106; and when the pedal is reset, the first spring 106 is also reset.

The following describes a working principle of the structure shown in FIG. 1. After a driver steps on the pedal, the first piston 103 and the first flow adjustment assembly 107 may be considered as pedal simulators, or the first piston 103, the first spring 106, and the first flow adjustment assembly 107 may be considered as pedal simulators. Specifically, according to deduction of Bernoulli's equation, when liquid is at an equal height, higher flow velocity indicates lower pressure. In the solution provided in this application, flow velocity can be controlled by using the first flow adjustment assembly. Pressure indicates force acting on the pedal, and may be specifically force exerted when the driver steps on the pedal. When a pedal feeling needs to be hard, the opening of the first flow adjustment assembly 107 can be controlled to be smaller; and when the pedal feeling needs to be soft, the opening of the first flow adjustment assembly 107 can be controlled to be larger. For example, it is assumed that a driver A has a preferred hard pedal feeling, and a driver B has a preferred soft pedal feeling. Emergency braking is used as an example. To implement emergency braking of a same degree, force when A steps on the pedal is greater than force when B steps on the pedal, and this is implemented by controlling the opening of the first flow adjustment assembly 107.

In a possible implementation, when obtaining a braking signal, the ECU 109 may first control the opening of the first flow adjustment assembly 107 to be maximum in a first time period, and control an opening change of the first flow adjustment assembly 107 after the first time period. In this case, the liquid in the first chamber 105 may flow into the liquid storage kettle 108 through the pipeline at a maximum flow in the first time period, and after the first time period, the liquid in the first chamber 105 flows into the liquid storage kettle 108 through the pipeline at an adjusted flow allowed by the first flow adjustment assembly 107. In this scenario, the pedal feeling is mainly simulated by using the first spring 106 in the first time period, and after the first time period, different pedal feelings are mainly simulated by changing the opening of the first flow adjustment assembly 107.

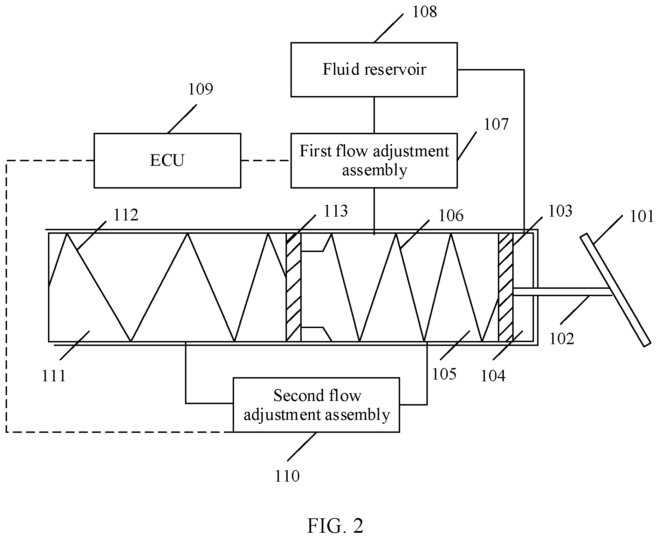

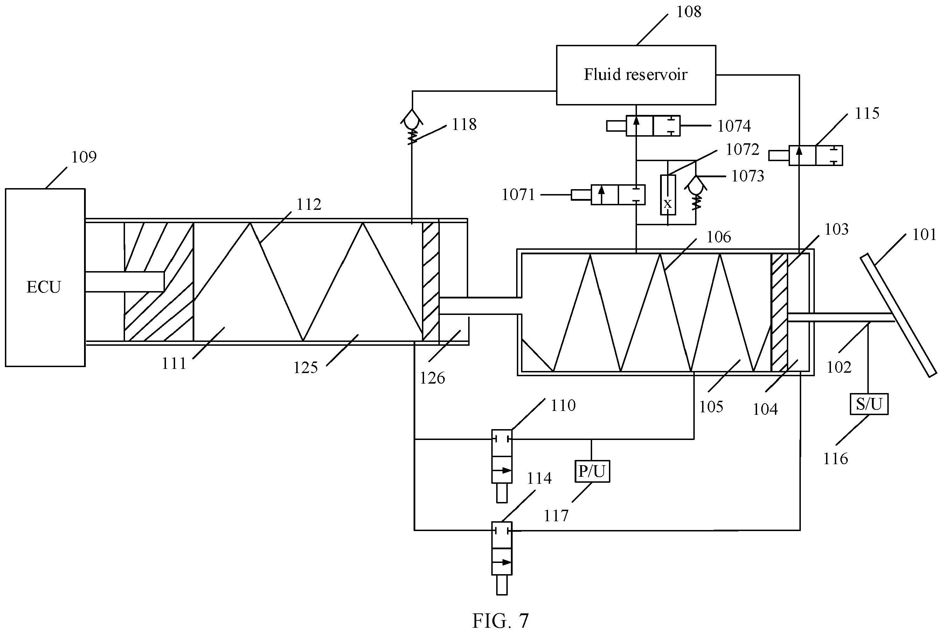

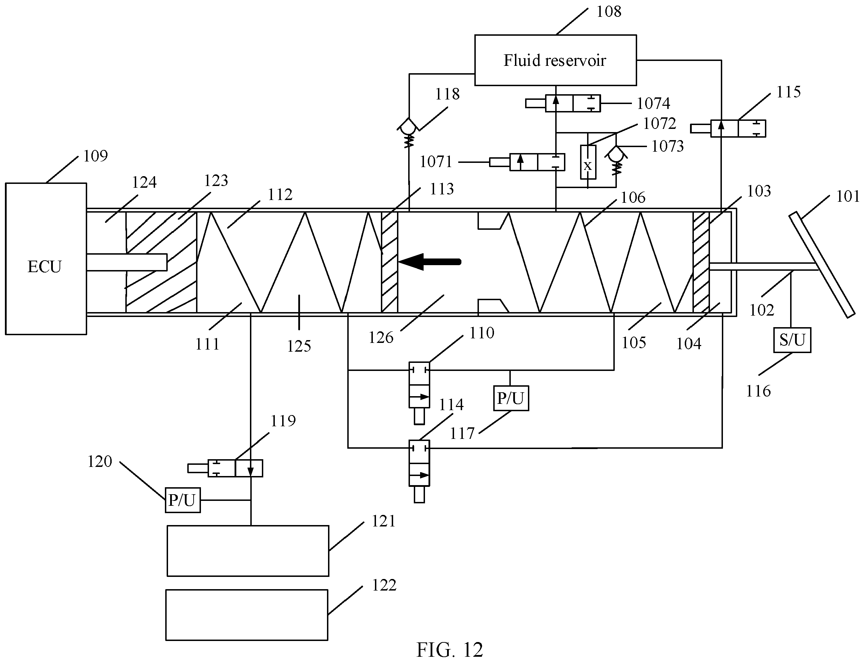

The foregoing describes content that the pedal feeling adjustment apparatus provided in this application can implement the function of simulating the different pedal feelings. The following describes content that the pedal feeling adjustment apparatus provided in this application can implement a function of adjusting a pedal returning speed. FIG. 2 is a schematic diagram of another structure of a pedal feeling adjustment apparatus according to an embodiment of this application. In a possible implementation, the pedal feeling adjustment apparatus provided in this application may further include a booster cylinder assembly and a second flow adjustment assembly 110. A second liquid through outlet of the first chamber is connected to one end of the second flow adjustment assembly 110, and the other end of the second flow adjustment assembly 110 is connected to a first liquid through outlet of the booster cylinder assembly. The ECU may control opening of the second flow adjustment assembly 110. For understanding of the opening of the flow adjustment assembly, refer to the opening of the first flow adjustment assembly. Details are not described herein and below again. The ECU can control the opening of the second flow adjustment assembly 110, so that liquid in the booster cylinder assembly flows into flows in the first chamber, thereby further adjusting the pedal returning speed. For example, when the pedal needs to be quickly returned, the opening of the second flow adjustment assembly 110 may be controlled to be larger, so that the liquid from the booster cylinder assembly quickly flows into the first chamber, and a pressure difference between the first chamber and the second chamber becomes larger, thereby facilitating quick return of the pedal. This implementation is applicable to a working condition in which continuous quick braking is required, for example, a scenario in which a vehicle continuously goes downhill. After the pedal is stepped on, due to limitations of the first spring and another inherent parameter, the pedal cannot return efficiently and quickly, or the pedal does not return improperly. In this case, pressure of the booster cylinder is high. After receiving a returning speed required by the pedal and pressure information obtained from the pedal, a system may control the opening of the second flow adjustment assembly 110, for example, increase the opening of the second flow adjustment assembly 110, so that the liquid in the booster cylinder assembly flows into the first chamber, thereby assisting and accelerating the return of the pedal. In a possible implementation, a second spring 112 is disposed in a cylinder body 111 of a booster cylinder of the booster cylinder assembly, two ends of the second spring 112 are connected to opposite side walls of the cylinder body of the booster cylinder, one of the opposite side walls may be a second piston 113, and the second piston 113 may be a floating piston. The other end of the second spring 112 may be connected to a third piston in the booster cylinder assembly, and the third piston may be driven by a booster motor in the booster cylinder assembly. It should be noted that the second piston divides the cylinder body 111 of the booster cylinder into a third chamber 125 and a fourth chamber 126 (it can be clearly seen that the second piston divides the cylinder body 111 into the third chamber 125 and the fourth chamber 126 in FIG. 7 and FIG. 12).

In a possible implementation, rigidity of the first spring is less than rigidity of the second spring 112. When the rigidity of the first spring is less than the rigidity of the second spring 112, decoupling between the main cylinder and the booster cylinder can be better implemented. Because of the second spring 112, an initial position of the second piston 113 remains unchanged. Because the rigidity of the first spring is less than the rigidity of the second spring 112, force exerted by the first spring on the second piston 113 is insufficient for displacement of the second piston 113, thereby helping decoupling between the main cylinder and the booster cylinder. In addition, it should be noted that, that the rigidity of the first spring is less than the rigidity of the second spring 112 is not a prerequisite for implementing decoupling between the main cylinder and the booster cylinder in this solution, and is merely used as a preferable solution of the solution provided in this application. When the rigidity of the first spring is equal to the rigidity of the second spring 112, or the rigidity of the first spring is greater than the rigidity of the second spring 112, the solution provided in this application can also implement decoupling between the main cylinder and the booster cylinder. Specifically, when the pedal is stepped on, the liquid in the first chamber may enter the liquid storage kettle through the first flow adjustment assembly, and this does not exert force on the second piston 113, or exerts small force on the second piston 113, thereby implementing decoupling between the main cylinder and the booster cylinder. Decoupling between the main cylinder and the booster cylinder can prevent a risk of injuring driver's foot. The electronic control booster system is divided into two types based on its structure, one is a decoupled booster system and the other is a non-decoupled booster system. The non-decoupled booster system is coupled with the brake pedal through an input rod of a booster. Therefore, the pedal moves forward with the booster during active braking. During active braking of the electronic control booster system, driver's foot can be placed randomly because the driver does not need to brake through stepping on the pedal. If the foot is placed under the pedal, the driver's foot may be touched. As a result, driving comfort is affected or the driver is injured.

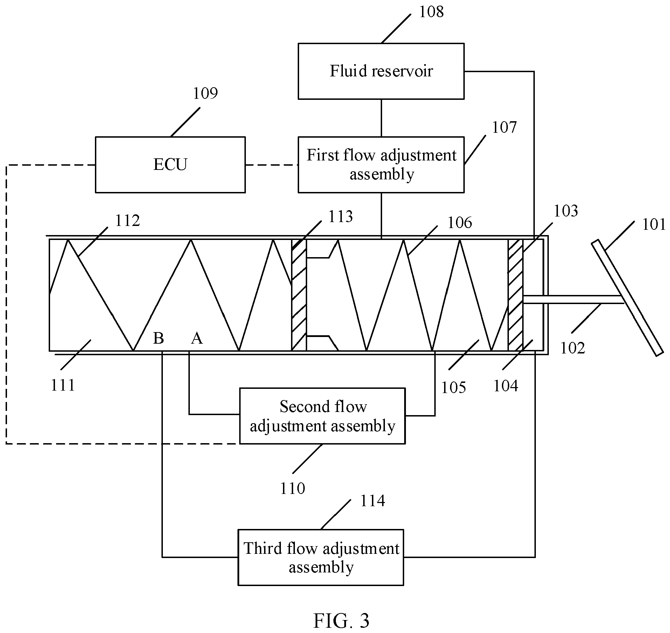

The foregoing describes content that the pedal feeling adjustment apparatus provided in this application can implement the function of simulating the different pedal feelings and the function of adjusting the pedal returning speed. In addition, the pedal returning speed may be further controlled in the solution provided in this application. This is described below. FIG. 3 is a schematic diagram of another structure of a pedal feeling adjustment apparatus according to an embodiment of this application. As shown in FIG. 3, the pedal feeling adjustment apparatus provided in this application may further include a third flow adjustment assembly 114. One end of the third flow adjustment assembly 114 is connected to a first liquid through outlet of the second chamber, and the other end of the third flow adjustment assembly 114 is connected to a second liquid through outlet of the booster cylinder assembly. The ECU is electrically connected to the third flow adjustment assembly 114 (not shown in the figure), and the ECU may control opening of the third flow adjustment assembly 114. For example, the ECU may control the opening of the third flow adjustment assembly 114 based on pressure fed back from the first chamber, and adjust the pressure difference between the first chamber and the second chamber, thereby controlling the pedal returning speed.

In a possible implementation, the second liquid through outlet of the booster cylinder assembly is the same as the first liquid through outlet of the booster cylinder assembly. That is, a liquid through outlet A and a liquid through outlet B shown in FIG. 3 are a same liquid through outlet.

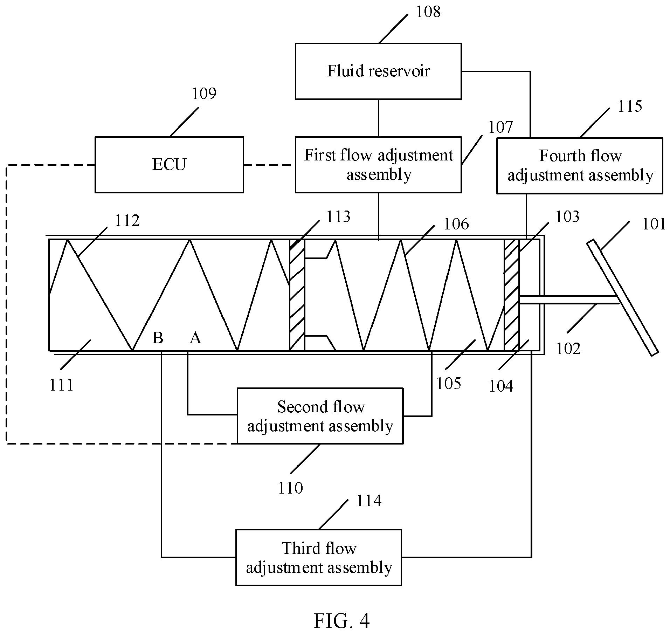

In a possible implementation, the pedal feeling adjustment apparatus provided in this application further includes a fourth flow adjustment assembly 115. FIG. 4 is a schematic diagram of another structure of a pedal feeling adjustment apparatus according to an embodiment of this application. One end of the fourth flow adjustment assembly 115 is connected to a liquid outlet of the oil can, and the other end of the fourth flow adjustment assembly 115 is connected to a second liquid through outlet of the second chamber. The ECU is electrically connected to the fourth flow adjustment assembly 115 (not shown in the figure), and the ECU may control opening of the fourth flow adjustment assembly 115. The third flow adjustment assembly is disposed on a pipeline between the booster cylinder and the second chamber, and can control a flow of liquid in the pipeline between the booster cylinder and the second chamber. The fourth flow adjustment assembly 115 is disposed on a pipeline between the second chamber and the liquid storage kettle, and can control a flow of liquid in the pipeline between the second chamber and the liquid storage kettle. The ECU can control the opening of the third flow adjustment assembly and the opening of the fourth flow adjustment assembly 115 to more accurately control pressure in the second chamber, and further more accurately adjust the pressure difference between the first chamber and the second chamber, thereby more accurately controlling the pedal returning speed.

To better understand the technical solution provided in this application, the following specifically describes the pedal feeling adjustment apparatus provided in this application with reference to several specific embodiments.

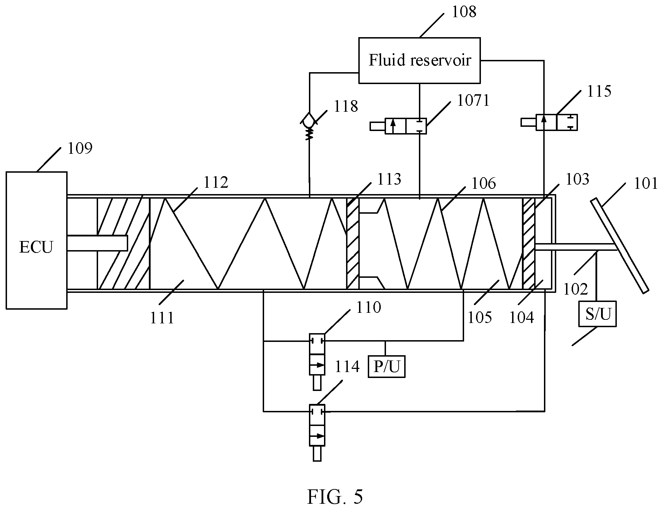

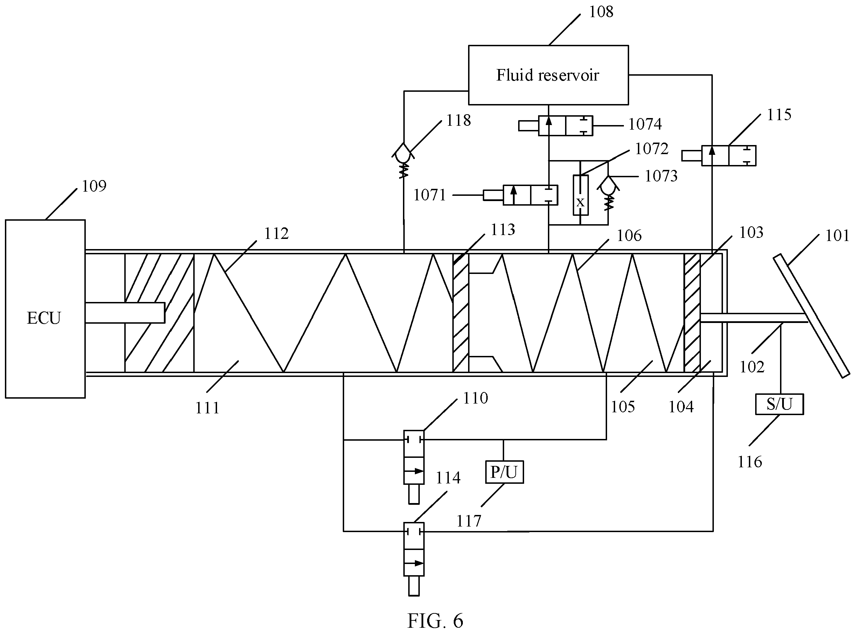

FIG. 5 is a schematic diagram of another structure of a pedal feeling adjustment apparatus according to an embodiment of this application. In this embodiment, the first flow adjustment assembly, the second flow adjustment assembly, the third flow adjustment assembly, and the fourth flow adjustment assembly each are an electronically controlled proportional valve. In a possible implementation, the first electronically controlled proportional valve, the second electronically controlled proportional valve, and the third electronically controlled proportional valve each are a normally closed electronically controlled proportional valves, and the fourth electroniclly controlled proportional valve is a normally open electronically controlled proportional valve. It should be noted that the electronically controlled proportional valve is sometimes referred to as a proportional valve in this application. When a difference between the electronically controlled proportional valve and the proportional valve is not emphasized, the electronically controlled proportional valve and the proportional valve have a same meaning. In a possible implementation, the first flow adjustment assembly may include only a first electronically controlled proportional valve 1071, the first flow adjustment assembly may include only an electronically controlled throttling valve 1072, or the first flow adjustment assembly may include a first electronically controlled proportional valve 1071 and an electronically controlled throttling valve 1072. The following describes, with reference to FIG. 5 and FIG. 6, that the first flow adjustment assembly includes the first electronically controlled proportional valve 1071, and that the first flow adjustment assembly includes the first electronically controlled proportional valve 1071 and the electronically controlled throttling valve 1072. FIG. 5 is a schematic diagram in which the first flow adjustment assembly includes only the first electronically controlled proportional valve 1071. Compared with a case in which the first flow adjustment assembly includes only the electronically controlled throttling valve 1072, the case in which the first flow adjustment assembly includes the first electronically controlled proportional valve 1071 has more accurate control over a flow of liquid entering the first electronically controlled proportional valve. However, the entire pedal feeling adjustment apparatus cannot work normally after the first electronically controlled proportional valve 1071 is faulty. Therefore, the first flow adjustment assembly provided in this application may further include the electronically controlled throttling valve 1072, to obtain a pedal feeling adjustment apparatus with a better pedal simulation effect. FIG. 6 is a schematic diagram of another structure of a pedal feeling adjustment apparatus according to an embodiment of this application. As shown in FIG. 6, the electronically controlled throttling valve 1072 and an electronically controlled proportional valve 1074 are connected in parallel. One end of a structure in which the electronically controlled throttling valve and the electronically controlled proportional valve are connected in parallel is connected to the first liquid through outlet of the first chamber, and the other end of the structure in which the electronically controlled throttling valve and the electronically controlled proportional valve are connected in parallel is connected to the liquid storage kettle. Because the electronically controlled throttling valve does not have a flow negative feedback function, the electronically controlled throttling valve cannot compensate for speed instability caused by a load change, and is used only in a scenario in which a small load change or a stability requirement is not high. In the structure shown in FIG. 6, the electronically controlled throttling valve 1072 may be used for initial coarse adjustment, and the first electronically controlled proportional valve 1071 may be used for precise adjustment. In addition, the electronic controlled throttling valve used herein cannot totally throttle, and the electronic controlled throttling valve and the electronic controlled proportional valve herein may be used for system backup. This ensures that, when any valve body fails in the system in which the valve bodies are connected in parallel, fluid can still flow from the chamber 105 to the liquid storage kettle 108 in the system, thereby implementing a braking function. In addition, two electronic controlled proportional valves may be used at the same time to implement a same function. It should be noted that the electronic controlled throttling valve is sometimes referred to as a throttling valve in this application. When a difference between the electronic controlled throttling valve and the throttling valve is not emphasized, the electronic controlled throttling valve and the throttling valve have a same meaning. To ensure that the pedal feeling adjustment apparatus can still work normally after the first electronically controlled proportional valve is faulty, as shown in FIG. 6, in a possible implementation, the first flow adjustment assembly further includes a first one-way valve 1073, the first one-way valve 1073, the electronically controlled throttling valve 1072, and the electronically controlled proportional valve 1071 are connected in parallel, one end of a structure in which the first one-way valve 1073, the electronically controlled throttling valve 1072, and the electronically controlled proportional valve 1071 are connected in parallel is connected to the first liquid through outlet of the first chamber, the other end of the structure in which the first one-way valve 1073, the electronically controlled throttling valve 1072, and the electronically controlled proportional valve 1071 are connected in parallel is connected to the liquid storage kettle, and a conduction direction of the first one-way valve 1071 is a direction from the liquid storage kettle to the first chamber. In a possible implementation, the pedal feeling adjustment apparatus may further include a fifth flow adjustment assembly 1074. The other end of the first flow adjustment assembly is connected to the liquid outlet of the liquid storage kettle by using the fifth flow adjustment assembly 1074. In other words, one end of the fifth flow adjustment assembly 1074 is connected to the liquid storage kettle, and the other end of the fifth flow adjustment assembly 1074 is connected to the first flow adjustment assembly. The fifth flow adjustment assembly 1074 is electrically connected to the ECU, and the ECU may control opening of the fifth flow adjustment assembly 1074. In a possible implementation, the fifth flow adjustment assembly may be an electronically controlled proportional valve. Specifically, the fifth flow adjustment assembly 1074 may be a normally open electronically controlled proportional valve. In a possible implementation, the apparatus may further include a second one-way valve 118. The second one-way valve 118 is disposed on a pipe between the booster cylinder body and the liquid storage kettle, and a conduction direction of the second one-way valve 118 is a direction from the liquid storage kettle to the booster cylinder body. The pedal feeling adjustment apparatus provided in this application may further include another apparatus, for example, may further include a pedal forming sensor 116 and a first pressure sensor 117.

In the pedal feeling adjustment apparatus described in FIG. 1 to FIG. 6, the booster cylinder assembly and the main cylinder assembly are arranged coaxially. Specifically, the booster cylinder body of the booster cylinder assembly and the main cylinder body of the main cylinder assembly are arranged coaxially. It should be noted that, in some implementations, the booster cylinder body and the main cylinder body may not be arranged coaxially. This is described below with reference to FIG. 7. In FIG. 7, on the basis of FIG. 6, the coaxial arrangement of the main cylinder body and the booster cylinder body is changed to the non-coaxial arrangement. It should be noted that, the main cylinder body and the booster cylinder body in the structure of the pedal feeling adjustment apparatus shown in FIG. 1 to FIG. 5 may also be changed to be in the non-coaxial arrangement with reference to the structure shown in FIG. 7. Schematic diagrams are not drawn one by one in this application.

The foregoing describes the structures of the pedal feeling adjustment apparatus provided in embodiments of this application. The solution provided in this application can be well adapted to various working conditions of the vehicle through cooperation between the ECU and the flow adjustment assembly. The following describes a control method provided in this application.

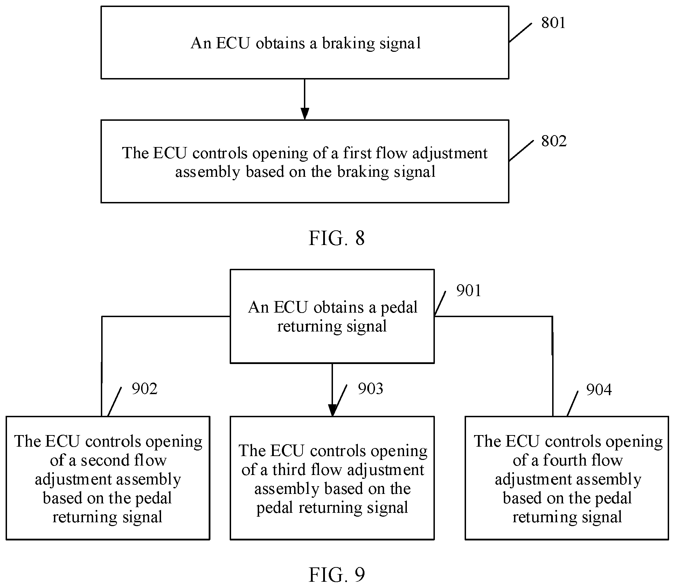

FIG. 8 is a schematic flowchart of a control method according to an embodiment of this application.

As shown in FIG. 8, the control method provided in this embodiment of this application may include the following steps:
801: An ECU obtains a braking signal.

In a possible implementation, the ECU may obtain the braking signal based on a displacement signal obtained by a pedal travel sensor. The pedal travel sensor 116 may be installed on a brake pedal, or the pedal travel sensor may be installed on a push rod. It should be noted that the pedal travel sensor is sometimes referred to as a displacement sensor in this application. When a difference between the pedal travel sensor and the displacement sensor is not emphasized, the pedal travel sensor and the displacement sensor have a same meaning. An output end of the pedal travel sensor is electrically connected to the ECU. The pedal travel sensor may send the obtained displacement signal to the ECU. The pedal travel sensor is a displacement sensor, and is configured to sense travel stepped on by a driver when the brake pedal is stepped on, and transmit a sensing signal to the ECU. The ECU may determine a braking requirement of a vehicle based on the signal sent by the pedal travel sensor, and control a wheel assembly and the like to work to provide braking force for the vehicle.

In a possible implementation, in a specific implementation, for example, in an intelligent driving scenario, the braking signal may alternatively be obtained according to an upper-layer advanced driver assistance system (advanced driver assistance system, ADAS) instruction. An ADAS includes driver assistance functions such as a pre-collision security function, an adaptive cruise control function, and a lane keeping assist function. These driver assistance functions are constructed in the same vehicle to help the driver avoid a collision, follow a vehicle ahead, or keep own vehicle in its lane. In a specific implementation, the braking signal may alternatively be other information related to a vehicle status. For example, the braking signal may alternatively be a steering wheel angle, a wheel speed signal, longitudinal acceleration (a driving direction of the vehicle at a current moment is a longitudinal direction), transverse acceleration, or drive motor torsion. It should be noted that, in this application, the ECU controls opening of a first flow adjustment assembly based on the braking signal, to simulate a plurality of pedal feelings. Therefore, the braking signal obtained by the ECU in this application is mainly a braking signal obtained based on the displacement signal obtained by the pedal travel sensor. In a possible implementation, the braking information may include the displacement signal and an acceleration signal.

It should be noted that, in a possible implementation, the ECU in this application may be understood as processors, personal computers (personal computer, PC), vehicle control units (vehicle control unit, VCU), or the like of various models.

802: The ECU controls the opening of the first flow adjustment assembly based on the braking signal.

One end of the first flow adjustment assembly is connected to a first liquid through outlet of a first chamber of a main cylinder assembly, the other end of the first flow adjustment assembly is connected to a liquid outlet of a liquid storage kettle, a main cylinder body of the main cylinder assembly is divided into the first chamber and a second chamber by using a piston disposed in the main cylinder body, the first chamber and the second chamber are two seal chambers that are not connected, the piston is connected to one end of a push rod of the main cylinder assembly, and the other end of the push rod passes through the second chamber and is connected to a pedal assembly.

When the brake pedal is stepped on, the first piston is pushed to move and compress a first spring to generate fixed curved pedal force. Because parameters of the spring are preset, the fixed curved pedal force cannot be changed. The ECU controls and adjusts the opening and time of the first flow adjustment assembly based on the obtained braking signal, to simulate the plurality of pedal feelings.

In a possible implementation, the braking signal further includes a signal sent by a first pressure sensor. The first pressure sensor may collect pressure inside the first chamber in real time, and send the collected signal to the ECU. The ECU controls the opening and the time of the first flow adjustment assembly based on the obtained signal sent by the first pressure sensor, to simulate the plurality of pedal feelings.

In a possible implementation, to simulate better pedal feelings, the first flow assembly includes a proportional valve and an electronically controlled throttling valve. The ECU may control, based on the obtained braking signal, the throttling valve to pre-adjust opening of the valve body to simulate an initial pedal, and cooperate in adjusting opening and time of the proportional valve, to simulate the plurality of pedal feelings.

It can be learned from the embodiment corresponding to FIG. 9 that the ECU can control the opening of the first flow adjustment assembly based on the braking signal, to further simulate the plurality of pedal feelings.

FIG. 9 is another schematic flowchart of a control method according to an embodiment of this application.

As shown in FIG. 9, the control method provided in this embodiment of this application may include the following steps:
901: The ECU obtains a pedal returning signal.

The returning signal may include one or more of a signal that is obtained by the ECU and that is sent by a pedal travel sensor or a signal that is obtained by the ECU and that is sent by a first pressure sensor. The signal sent by the pedal travel sensor may include a pedal returning speed or acceleration information, and the signal sent by the first pressure sensor may include a magnitude of pressure in a first chamber. In a possible implementation, in a specific implementation, for example, in an intelligent driving scenario, the braking signal may alternatively be obtained according to an ADAS instruction.

902: The ECU controls opening of a second flow adjustment assembly based on the pedal returning signal.

One end of the second flow adjustment assembly is connected to a second liquid through outlet of the first chamber, and the other end of the second flow adjustment assembly is connected to a first liquid through outlet of a booster cylinder assembly. The ECU may adjust the opening of the second flow adjustment assembly based on the returning signal. For example, when the ECU determines, based on the pedal returning signal, that a pedal needs to accelerate pedal returning, the opening of the second flow adjustment assembly may be increased. Liquid pressure in the first chamber increases accordingly when the opening of the second flow adjustment assembly increases, thereby increasing the pedal returning speed.

In a possible implementation, step 903 in which the ECU controls opening of a third flow adjustment assembly based on the pedal returning signal may be further included. One end of the third flow adjustment assembly is connected to a first liquid through outlet of the second chamber, and the other end of the third flow adjustment assembly is connected to a second liquid through outlet of the booster cylinder assembly. The ECU may control the third flow adjustment based on the returning signal, to control the pedal returning speed, force, and the like. The opening of the third flow adjustment assembly may be used to indirectly adjust the pressure in the second chamber. For example, larger opening of the third flow adjustment assembly indicates a quicker speed at which the pressure in the second chamber increases. A pressure difference between the first chamber and the second chamber is related to the pedal returning speed. When the pressure in the first chamber is greater than the pressure in the second chamber, the pedal returns. When the pressure difference between the first chamber and the second chamber becomes smaller, the pedal returning speed becomes slower. Smaller opening of the third flow adjustment assembly indicates a slower speed at which the pressure in the second chamber increases. When the pressure difference between the first chamber and the second chamber becomes larger, the pedal returning speed becomes quicker. In a possible implementation, step 904 in which the ECU controls opening of a fourth flow adjustment assembly based on the pedal returning signal may be further included. One end of the fourth flow adjustment assembly is connected to a liquid outlet of the oil can, and the other end of the fourth flow adjustment assembly is connected to a second liquid through outlet of the second chamber. The ECU may control the third flow adjustment based on the returning signal, to accurately control the pedal returning speed, force, and the like. The pressure in the second chamber may be adjusted by using the opening of the third flow adjustment assembly and the opening of the fourth flow adjustment assembly. Larger opening of the third flow adjustment assembly indicates a quicker speed at which the pressure in the second chamber increases. Larger opening of the fourth flow adjustment assembly indicates a slower speed at which the pressure in the second chamber increases or decreased pressure in the second chamber. The opening of the third flow adjustment assembly and the opening of the fourth flow adjustment assembly are controlled to more accurately adjust the pressure in the second chamber, thereby better controlling the pedal returning speed.

The pedal feeling adjustment apparatus and the control method provided in this application may further implement assisted braking, joint braking, and unassisted braking. The following provides descriptions. The following describes a structure of a brake system provided in this application, to better understand this solution.

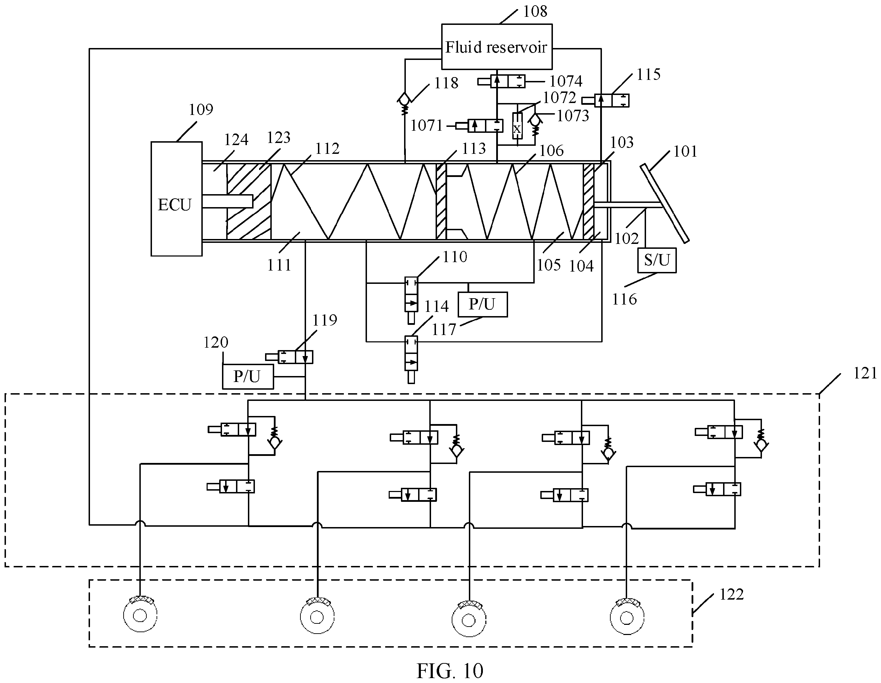

FIG. 10 is a schematic diagram of a structure of a brake system according to an embodiment of this application. As shown in FIG. 10, the brake system provided in this application includes a pedal feeling adjustment apparatus, a second pressure sensor 120, an electronically controlled proportional valve 119, an adjustment valve group 121, and a wheel assembly 122. A connection relationship between components in the pedal feeling adjustment assembly may be understood with reference to the pedal feeling adjustment apparatus described in FIG. 1 to FIG. 7. The adjustment valve group may control a flow volume of liquid flowing into the wheel assembly. The adjustment valve group may have a plurality of structures. The structure shown in FIG. 10 is only an example. In addition, it should be noted that a structure of the adjustment valve group and a structure between the adjustment valve group and the wheel assembly are not inventive points of the solutions provided in this application, and structures that can be used by the adjustment valve group and the wheel assembly in the conventional technology can be used in embodiments of this application.

The pedal feeling adjustment apparatus and the control method provided in this application can implement assisted braking. Specifically, after a pedal works, for example, after a driver steps on the pedal, a displacement sensor sends obtained pedal displacement information to an ECU. The ECU controls, based on the obtained displacement information, a booster motor in a booster cylinder assembly to drive, based on a motion status of the pedal, a piston in the booster cylinder assembly to work, so as to compress space of the booster cylinder, establish pressure, and adjust the wheel assembly, specifically, independent pressure of a caliper in the wheel assembly through adjusting the valve group.

The pedal feeling adjustment apparatus and the control method provided in this application may further implement unassisted braking and emergency joint braking. The following describes the two scenarios.

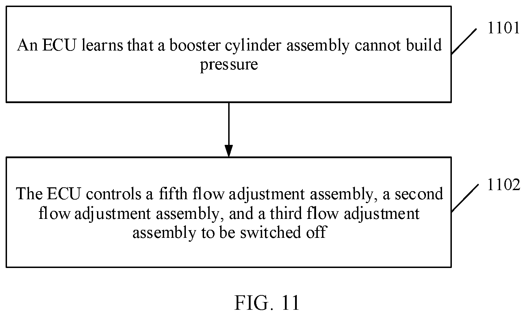

FIG. 11 is another schematic flowchart of a control method according to an embodiment of this application.

As shown in FIG. 11, the control method provided in this embodiment of this application may include the following steps:
1101: The ECU learns that a booster cylinder assembly cannot establish pressure.

If a booster motor cannot establish the pressure, that is, the booster motor 124 cannot drive a third piston 123 to move, a booster cylinder body is compressed to establish the pressure. There may be a plurality of reasons why the booster motor cannot establish the pressure. This is not limited in this embodiment of this application. When obtaining that the booster cylinder assembly cannot establish the pressure, the ECU performs step 1102.

1102: The ECU controls a fifth flow adjustment assembly, a second flow adjustment assembly, and a third flow adjustment assembly to be switched off.

Descriptions are provided by using the structure corresponding to FIG. 6 as an example. It should be noted that the structures described in FIG. 1 to FIG. 5 are also applicable to the control method provided in this application. Because principles are the same, details are not described one by one in this application. Details are not described below again. When the ECU learns that the booster cylinder assembly cannot establish the pressure, for example, the booster motor of the booster cylinder assembly is faulty and cannot drive the third piston 123 to move in this case, the ECU controls the fifth flow adjustment assembly, the second flow adjustment assembly, and the third flow adjustment assembly to be switched off, or it may be considered that opening of the fifth flow adjustment assembly, opening of the second flow adjustment assembly, and opening of the third sixth adjustment assembly controlled by the ECU are the minimum. Descriptions are provided by using an example in FIG. 12. An ECU controls an electronically controlled proportional valve 1074, an electronically controlled proportional valve 110, and a proportional valve 114 to be switched off. After the electronically controlled proportional valve 1074 is switched off, when a pedal is stepped on, liquid in a main cylinder body does not flow into a liquid storage kettle through a pipeline. Because a first chamber and a third chamber are connected, the liquid pushes a second piston 113 to move, so as to compress a booster cylinder body, thereby increasing pressure in the booster cylinder body. In addition, to ensure effectively increasing the pressure, the ECU controls a second flow adjustment assembly, for example, the electronically controlled proportional valve 110, and a third flow adjustment assembly 114 to be switched off. This ensures that liquid in the booster cylinder body does not flow back to the main cylinder body.

It can be learned from the embodiment corresponding to FIG. 11 that, the solution provided in this application can implement unassisted braking. When the booster cylinder assembly cannot establish the pressure by using the motor because the booster motor is faulty or in another case, the pedal is stepped on for increasing the pressure, thereby implementing braking. This scenario is unassisted braking because the booster motor does not need to participate in braking in this case.

The solutions provided in this application may further implement emergency joint braking. Specifically, emergency joint braking indicates that a motor drives a third piston 123 to increase pressure in a booster cylinder body, and pressure in a main cylinder body is increased to drive a second piston 113 to compress space of the booster cylinder body. In other words, both the second piston 113 and the third piston 123 are driven to approach each other, to facilitate quickly increasing the pressure in the booster cylinder body. This has good application in some scenarios in which emergency braking is required. The following describes this in detail.

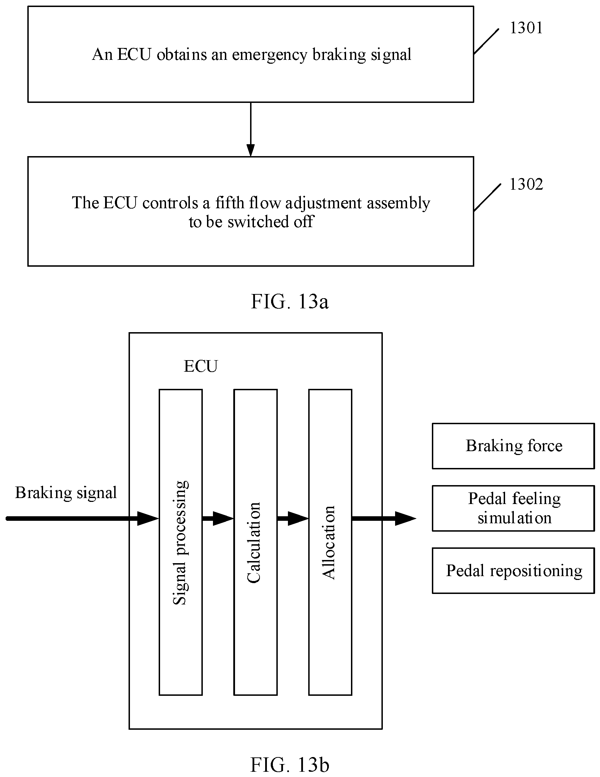

FIG. 13a is a schematic flowchart of a control method according to an embodiment of this application.

As shown in FIG. 13a, the control method provided in this embodiment of this application may include the following steps:
1301: An ECU obtains an emergency braking signal.

The emergency braking signal may be preset. For example, when a pedal travel sensor learns that acceleration or a speed of a pedal reaches a threshold, it may be considered that the speed or the acceleration reaches the threshold is the emergency braking signal. Alternatively, the emergency braking signal may be an upper-layer advanced driver assistance system ADAS instruction. An ADAS includes driver assistance functions such as a pre-collision security function, an adaptive cruise control function, and a lane keeping assist function, and can be implemented through learning of a vehicle self-learning function. That is, a vehicle records a braking curve of the latest 500 times of stepping performed by a driver, records and analyzes a subsequent vehicle running status, and predicts a braking habit and preference of the driver based on the pieces of data, to optimize braking performance and improve matching between a braking system and the driver. These driver assistance functions are constructed in the same vehicle to help the driver avoid a collision, follow a vehicle ahead, or keep own vehicle in its lane.

1302: The ECU controls a fifth flow adjustment assembly to be switched off.

Descriptions are provided by using an example in FIG. 12. If the ECU controls the fifth flow regulation assembly to be switched off, it may be considered that the ECU controls the electronically controlled proportional valve 1074 to be switched off. It may also be considered that the ECU controls the electronically controlled proportional valve 1074 to be switched off is the ECU controls opening of the electronically controlled proportional valve 1074 to be minimum. When the ECU obtains the emergency braking signal, the ECU controls the fifth flow adjustment assembly to be switched off. When a driver steps on a pedal, liquid in a main cylinder body does not flow into a liquid storage kettle through a pipeline, but pushes a second piston 113 to move, so as to compress a booster cylinder body and increase pressure in the booster cylinder body. At the same time, a booster motor also drives a piston 123 to move, so as to increase pressure in the booster cylinder body. This facilitates the booster cylinder body quickly establish the pressure and implements emergency braking.

In a possible implementation, the ECU may further control a first flow adjustment assembly to be switched off. For example, as shown in FIG. 12, the ECU may control an electronically controlled proportional valve 1071 and an electronically controlled throttling valve 1072 to be switched off.

In a possible implementation, the ECU may further control a second flow adjustment assembly to be switched off or a third flow adjustment assembly to be switched off, or control both the second flow adjustment assembly and the third flow adjustment assembly to be switched off.

In a possible implementation, a backup may be further performed on a key component in this application, that is, redundancy design is performed, to ensure that when the key component is faulty, the system does not break down and can still continue to work normally. For example, according to this application, dual power supplies and a six-phase motor may be used, and backup is performed on both a displacement sensor 116 and a pressure sensor 117.

The following describes how the ECU controls working of components based on the braking signal with reference to FIG. 13b, to better understand the technical solutions provided in this application. FIG. 13b is a schematic flowchart of a braking control method according to an embodiment of this application. An ECU may perform processing based on the braking signal mentioned above, to calculate one or more pieces of information of braking force, pedal feeling simulation force, and a pedal returning speed required by a vehicle. Specifically, the braking signal may include an upper-layer ADAS instruction, a signal obtained by a pedal travel sensor, a steering wheel angle, a wheel speed signal, longitudinal acceleration, transverse acceleration, and the like. In addition, the braking signal may further include some other wheel status information, for example, drive motor torsion. After determining the braking force required by the vehicle, the ECU allocates the braking force. The ECU may also adjust opening of a flow adjustment assembly based on the obtained braking signal, to simulate different pedal feelings and control different pedal returning speeds. For a specific manner, refer to the foregoing descriptions. Details are not described herein again.

The foregoing describes the pedal feeling adjustment apparatus and the control method provided in this application. The following describes the solutions provided in this application with reference to several possible application scenarios, to better understand the solutions provided in this application.

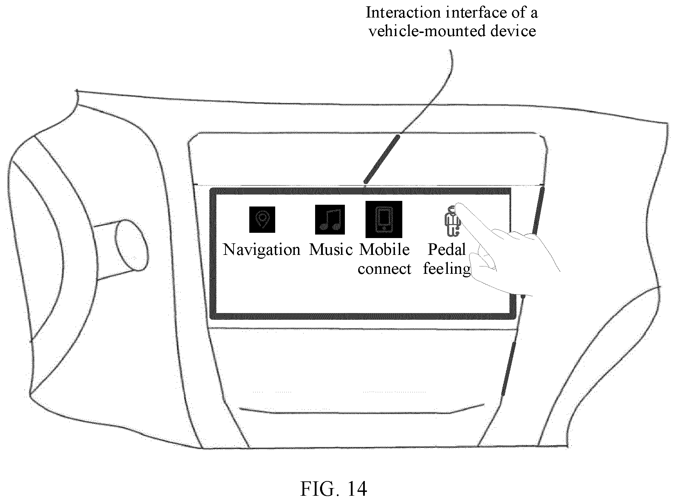

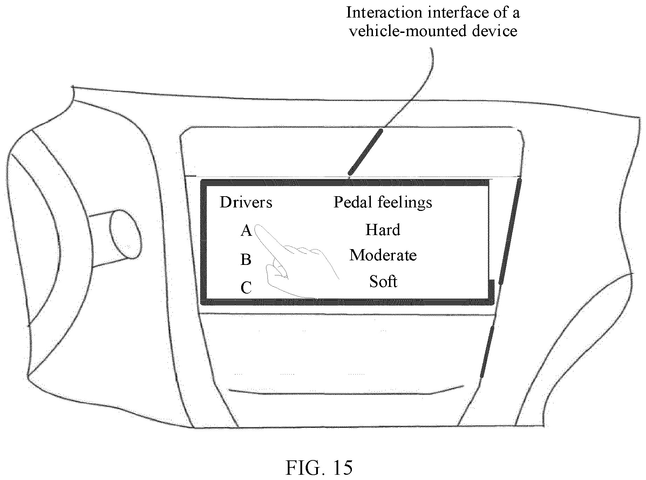

FIG. 14 is a schematic diagram of an application scenario of a pedal feeling adjustment apparatus according to this application. The pedal feeling adjustment apparatus provided in this application can implement a plurality of pedal feelings. In a possible application scenario, different drivers may use different pedal feelings. For example, in a family, a car in the family may be driven by a host, a hostess, or the elderly, and pedal feeling requirements of these three persons may be different. For example, the host wants a harder pedal feeling, the hostess may want a softer pedal feeling, and the elderly may want a pedal feeling softer than that of the hostess. Softness and hardness of the pedal feeling herein indicate displacement generated by the pedal on which same force is exerted. For example, when the force stepped by feet are the same, larger displacement generated by the pedal may be considered the softer pedal feeling; and when the force stepped by the feet are the same, smaller displacement generated by the pedal may be considered the harder pedal feeling. In the solutions provided in this application, different requirements of different drivers may be preset. For example, as shown in FIG. 14, a user may set different pedal feelings by setting an icon corresponding to motor pedal feeling setting in an interaction interface of a vehicle-mounted device. Different drivers have different requirements for the pedal feeling. For example, as shown in FIG. 15, three drivers A, B, and C are added. A is set to need a hard pedal feeling, B is set to need a moderate pedal feeling, C is set to need a soft pedal feeling. In the pedal feeling adjustment apparatus shown in FIG. 1 to FIG. 7, corresponding to three different feelings, the ECU controls the opening of the first flow adjustment component differently. For example, corresponding to the hard pedal feeling, the ECU controls the opening of the first flow adjustment assembly to be A; corresponding to the moderate pedal feeling, the ECU controls the opening of the first flow adjustment to be B; and corresponding to the soft pedal feeling, the ECU controls the opening of the flow adjustment assembly to be C. A relationship among A, B, and C may be that A is less than B and less than C, and B is less than C. When the driver A drives the vehicle, the driver A may select a requirement of the driver A in the user interaction interface of the vehicle-mounted device, for example, select a driver code "A" or select the pedal feeling "Hard". The ECU may adjust the opening of the first flow adjustment assembly to be A based on the requirement information. When the driver B drives the vehicle, the driver B may select B or select the pedal feeling "Moderate" in the user interaction interface of the vehicle-mounted device. The ECU may adjust the opening of the first flow adjustment assembly to be B based on the requirement information.

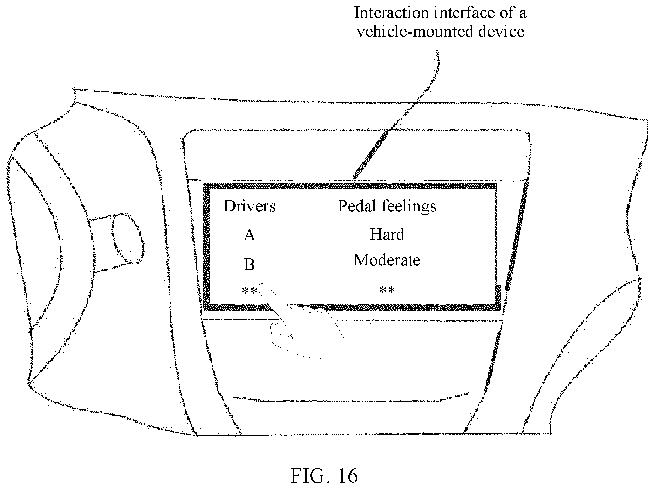

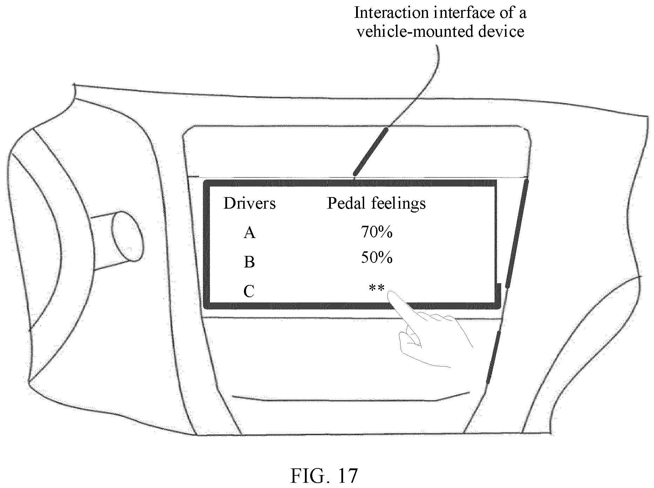

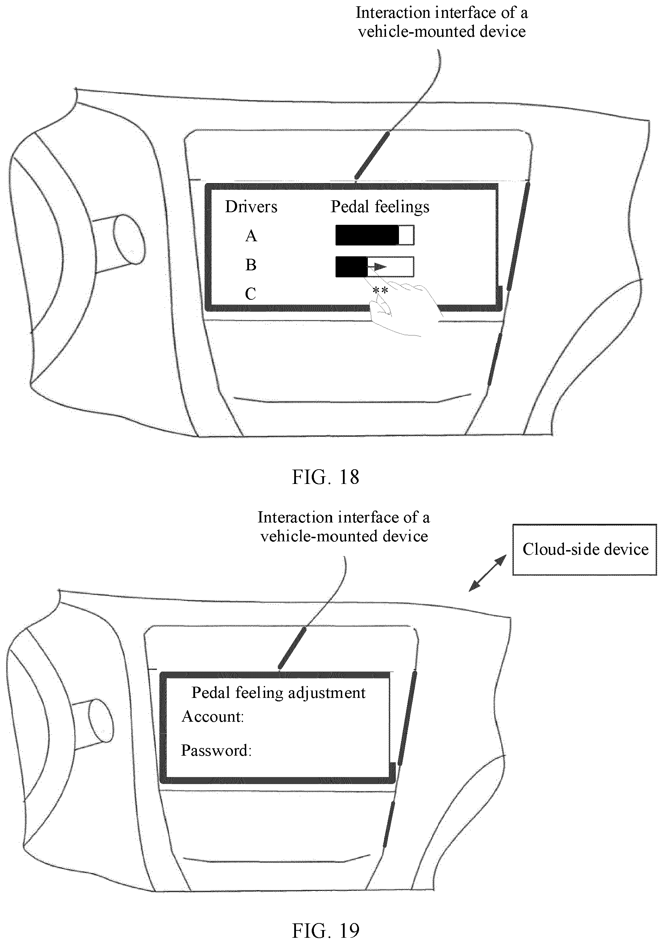

As shown in FIG. 16, in a possible implementation, the user is allowed to set a driver name and set different pedal feelings independently. For example, the user may add a new driver according to a requirement, or add a pedal feeling requirement corresponding to the new driver. For example, the user may further add a new driver C and a pedal feeling of the driver C. The user may also modify or delete the existing driver, or modify or delete the existing pedal feeling. For example, the user may delete the driver A and the pedal feeling corresponding to driver A; or may change the pedal feeling corresponding to driver A from hard to other, for example, to moderate or soft. It should be noted that, in embodiments of this application, in addition to the text, the user can select different pedal feelings in the interaction interface by using a graphic or a number. As shown in FIG. 17, different pedal feelings are displayed by using numbers, and the different numbers set by the user correspond to the different pedal feelings. For example, pedal feelings may correspond to 0 to 100%. The pedal feeling becomes harder as the value increases. Correspondingly, as the value increases, the opening of the first flow adjustment assembly adjusted by the ECU becomes smaller For example, if a pedal feeling 70% corresponds to opening A of the first flow adjustment assembly, and a pedal feeling 50% corresponds to opening B of the first flow adjustment assembly, A is less than B. Alternatively, as shown in FIG. 18, different pedal feelings may be further displayed by using graphics, and the user may adjust the pedal feelings in the interaction interface according to a requirement. Correspondingly, after obtaining the user requirement, the ECU adjusts the opening of the first flow adjustment assembly based on a preset correspondence between the requirement and the opening of the first flow adjustment assembly.

It should be noted that requirements of the drivers for the pedal feelings, namely, requirements of different drivers for the opening of the first flow adjustment assembly, may be stored in a terminal-side device, that is, stored in a memory of the vehicle. In a possible implementation, the requirements may also be stored in a cloud-side device. For example, different drivers may register with a cloud-side device by using an account and a password. As shown in FIG. 19, when a driver logs in to a terminal-side device by using an account and a password, a cloud-side device may send information corresponding to the account to the terminal-side device. For example, the information corresponding to the account may be opening of the first flow adjustment assembly. As shown in FIG. 19, the cloud-side device stores opening A of the first flow adjustment assembly corresponding to an account 1, opening B of the first flow adjustment assembly corresponding to an account 2, opening C of the first flow adjustment assembly corresponding to an account 3, and opening D of the first flow adjustment assembly corresponding to an account 4. The driver performs login by using the account 1 before driving, and obtains data, including the opening A of the first flow adjustment assembly, corresponding to the account 1 from the cloud-side device over a network. The cloud-side device sends the data corresponding to the account 1 to the vehicle, so that the vehicle can adjust the opening of the first flow adjustment assembly based on the data. An advantage of this embodiment is that the driver can still obtain a good pedal feeling even through the vehicle is changed. It should be noted that, in a possible implementation, pedal feeling data set by the driver may be further learned by using a neural network, to obtain a pedal feeling that better meets a driver experience.

An embodiment of this application further provides a computer-readable storage medium. The computer-readable storage medium stores a program in which an ECU controls opening of a flow adjustment assembly. When the program is run on a computer, the computer is enabled to perform the steps performed by the ECU in the method described in the embodiments shown in FIG. 8, FIG. 9, FIG. 11, and FIG. 13 a.

An embodiment of this application further provides a computer program product. When the computer program product runs on a computer, the computer is enabled to perform the steps performed by the ECU in the method described in the embodiments shown in FIG. 8, FIG. 9, FIG. 11, and FIG. 13 a. The computer program product includes one or more computer instructions. When the computer program instructions are loaded and executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

In addition, it should be noted that the described apparatus embodiments are merely examples. The units described as separate parts may or may not be physically separate, and parts displayed as units may or may not be physical units, and may be located in one position, or may be distributed on a plurality of network units. Some or all the modules may be selected according to an actual requirement to achieve the objectives of the solutions of the embodiments. In addition, in the accompanying drawings of the apparatus embodiments provided in this application, connection relationships between the modules indicate that the modules have communication connections with each other, which may be specifically implemented as one or more communication buses or signal cables.

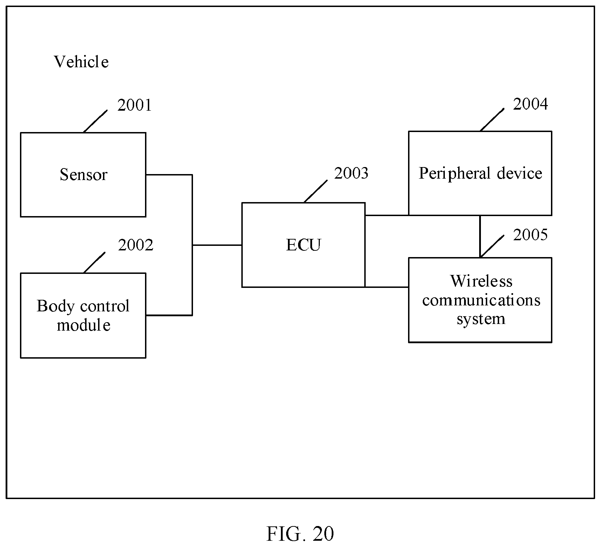

FIG. 20 is a schematic diagram of a structure of a vehicle further provided in this application. The vehicle may be a car, a bus, a semi-trailer, an off-road vehicle, a dedicated vehicle, a motor truck, a tractor, a dumping truck, or the like. FIG. 20 is merely the schematic diagram of the vehicle. Specifically, the vehicle may be an electric vehicle, a new energy vehicle, or the like. The pedal feeling adjustment apparatus described above in FIG. 1 to FIG. 19 is installed on the vehicle. The vehicle may include a sensor 2001, a body control module (body control module, BCM) 2002, an ECU 2003, a peripheral device 2004, and a wireless communications system 2005. The BCM 2002 may provide information such as an engine status, a speed, a gear, and a steering wheel angle of the vehicle for the ECU 2003. In this way, the ECU 2003 can control opening of a flow adjustment assembly based on the actions performed by the ECU 2003 described in FIG. 1 to FIG. 19 and based on the information provided by the BCM and information provided by the sensor 2001, for example, information provided by the pedal sensor 2001 or the pressure sensor 2001.

The vehicle interacts with the external sensor 2001, another vehicle, another computer system, or a user by using the peripheral device 2004. The peripheral device 2004 may include the wireless communications system 2005, a navigation system, a microphone, and/or a speaker. The user may implement pedal feeling adjustment setting by using a touchscreen of the peripheral device 2004, for example, understanding may be made with reference to FIG. 14 to FIG. 19. In another case, the peripheral device 2004 may provide a means for the vehicle to communicate with another device located in the vehicle. For example, the microphone may receive audio (for example, a voice command or another audio input) from the user of the vehicle. Likewise, the speaker may output audio to the user of the vehicle. The wireless communications system 2005 may perform wireless communication with one or more devices directly or over a communications network. For example, the wireless communications system 2005 may use 3G cellular communication such as code division multiple access (code division multiple access, CDMA), EVDO, or global system for mobile communications (global system for mobile communications, GSM)/general packet radio service (general packet radio service, GPRS), or 4G cellular communication such as long term evolution (long term evolution, LTE), or 5G cellular communication. The wireless communications system 2005 may communicate with a wireless local area network (wireless local area network, WLAN) by using Wi-Fi. In some embodiments, the wireless communications system 2005 may directly communicate with a device by using an infrared link, Bluetooth, or ZigBee. Other wireless protocols, for example, various vehicle communications systems, such as the wireless communications system 2005, may include one or more dedicated short range communications (dedicated short range communications, DSRC) devices, and these devices may include public and/or private data communication between the vehicle and/or roadside stations.

## Claims

1. A pedal feeling adjustment apparatus, comprising: a pedal assembly, a main cylinder assembly, a first flow adjustment assembly, an electronic control unit ECU, and a liquid storage kettle, wherein
the main cylinder assembly comprises a main cylinder body, a first piston is disposed in the main cylinder body, the first piston divides the main cylinder body into a first chamber and a second chamber, the first chamber and the second chamber are two chambers that are not connected, the first piston is connected to one end of a push rod of the main cylinder assembly, the other end of the push rod is connected to the pedal assembly through the second chamber, a first liquid through outlet of the first chamber is connected to one end of the first flow adjustment assembly, the other end of the first flow adjustment assembly is connected to a liquid outlet of the liquid storage kettle, and the ECU is electrically connected to the first flow adjustment assembly, to control opening of the first flow adjustment assembly.

2. The pedal feeling adjustment apparatus according to claim 1, further comprising a booster cylinder assembly and a second flow adjustment assembly, wherein
a second liquid through outlet of the first chamber is connected to one end of the second flow adjustment assembly, and the other end of the second flow adjustment assembly is connected to a first liquid through outlet of the booster cylinder assembly.

3. The pedal feeling adjustment apparatus according to claim 1 or 2, further comprising a third flow adjustment assembly, wherein
one end of the third flow adjustment assembly is connected to a first liquid through outlet of the second chamber, and the other end of the third flow adjustment assembly is connected to a second liquid through outlet of the booster cylinder assembly.

4. The pedal feeling adjustment apparatus according to claim 3, wherein the second liquid through outlet of the booster cylinder assembly is the same as the first liquid through outlet of the booster cylinder assembly.

5. The pedal feeling adjustment apparatus according to claim 3, further comprising a fourth flow adjustment assembly, wherein
one end of the fourth flow adjustment assembly is connected to a liquid outlet of the oil can, and the other end of the fourth flow adjustment assembly is connected to a second liquid through outlet of the second chamber

6. The pedal feeling adjustment apparatus according to any one of claims 1 to 5, wherein the first flow adjustment assembly comprises an electronically controlled proportional valve, one end of the electroniclly controlled proportional valve is connected to the first liquid through outlet of the first chamber, and the other end of the electronically controlled proportional valve is connected to the liquid storage kettle.

7. The pedal feeling adjustment apparatus according to claim 6, wherein the first flow adjustment assembly further comprises an electronically controlled throttling valve, the electronically controlled throttling valve and the electronically controlled proportional valve are connected in parallel, one end of a structure in which the electronically controlled throttling valve and the electronically controlled proportional valve are connected in parallel is connected to the first liquid through outlet of the first chamber, and the other end of the structure in which the electronically controlled throttling valve and the electronically controlled proportional valve are connected in parallel is connected to the liquid storage kettle.

8. The pedal feeling adjustment device according to claim 6, wherein the first flow adjustment assembly further comprises a first one-way valve, the first one-way valve, an electronically controlled throttling valve, and the electronically controlled proportional valve are connected in parallel, one end of a structure in which the first one-way valve, the electronically controlled throttling valve, and the electronically controlled proportional valve are connected in parallel is connected to the first through outlet of the first chamber, the other end of the structure in which the first one-way valve, the electronically controlled throttling valve, and the electronically controlled proportional valve are connected in parallel is connected to the , and a conduction direction of the first one-way valve is a direction from the to the first chamber.

9. The pedal feeling adjustment apparatus according to any one of claims 1 to 7, further comprising a fifth flow adjustment assembly, wherein
the other end of the first flow adjustment assembly is connected to the liquid outlet of the liquid storage kettle by using the fifth flow adjustment assembly.

10. The pedal feeling adjustment apparatus according to any one of claims 1 to 9, wherein the booster cylinder assembly comprises a booster cylinder body, a second piston is disposed in the booster cylinder body, the second piston divides the booster cylinder body into a third chamber and a fourth chamber, the third chamber and the fourth chamber are two chambers that are not connected, and the third chamber is connected to the first chamber

11. The pedal feeling adjustment apparatus according to claim 10, wherein a first spring is disposed in the main cylinder body, one end of the first spring is connected to the first piston, the other end of the first spring is connected to the second piston, a second spring is disposed in the booster cylinder body, one end of the second spring is connected to the second piston, the other end of the second spring is connected to a third piston in the booster cylinder assembly, and the third piston is driven by a motor in the booster cylinder assembly.

12. The pedal feeling adjustment apparatus according to claim 11, wherein rigidity of the first spring is less than rigidity of the second spring.

13. A control method, comprising:
obtaining, by an electronic control unit ECU, a braking signal; and
controlling, by the ECU, opening of a first flow adjustment assembly based on the braking signal, wherein one end of the first flow adjustment assembly is connected to a first through outlet of a first chamber of a master cylinder assembly, the other end of the first flow adjustment assembly is connected to a outlet of a , a master cylinder body of the master cylinder assembly is divided into the first chamber and a second chamber by using a piston disposed in the master cylinder body, the first chamber and the second chamber are two seal chambers that are not connected, the piston is connected to one end of a push rod of the master cylinder assembly, and the other end of the push rod passes through the second chamber and is connected to a pedal assembly.

14. The control method according to claim 13, wherein the method further comprises:
obtaining, by the ECU, a pedal returning signal; and
controlling, by the ECU, opening of a second flow adjustment assembly based on the pedal returning signal, wherein one end of the second flow adjustment assembly is connected to a second liquid through outlet of the first chamber, and the other end of the second flow adjustment assembly is connected to a first liquid through outlet of a booster cylinder assembly.

15. The control method according to claim 13 or 14, wherein the method further comprises:
controlling, by the ECU, opening of a third flow adjustment assembly based on the pedal returning signal, wherein one end of the third flow adjustment assembly is connected to a first liquid through outlet of the second chamber, and the other end of the third flow adjustment assembly is connected to a second liquid through outlet of the booster cylinder assembly.

16. The control method according to claim 15, wherein the method further comprises:
controlling, by the ECU, opening of a fourth flow adjustment assembly based on the pedal returning signal, wherein one end of the fourth flow adjustment assembly is connected to a liquid outlet of the oil can, and the other end of the fourth flow adjustment assembly is connected to a second liquid through outlet of the second chamber.

17. The control method according to claim 13, further comprising:
controlling, by the ECU when the ECU learns that a booster cylinder assembly cannot establish pressure, a fifth flow adjustment assembly, a second flow adjustment assembly, and a third flow adjustment assembly to be switched off, wherein one end of the fifth flow adjustment assembly is connected to the other end of the first flow adjustment assembly, the other end of the fifth flow adjustment assembly is connected to the liquid outlet of the liquid storage kettle, one end of the second flow adjustment assembly is connected to a second liquid through outlet of the first chamber, the other end of the second flow adjustment assembly is connected to a first liquid through outlet of the booster cylinder assembly, one end of the third flow adjustment assembly is connected to a liquid through outlet of the second chamber, and the other end of the third flow adjustment assembly is connected to a second liquid through outlet of the booster cylinder assembly.

18. The control method according to claim 13, further comprising:
controlling, by the ECU when the ECU obtains an emergency braking signal, the first flow adjustment assembly to be switched off.

19. The control method according to claim 18, wherein the method further comprises:
controlling, by the ECU when the ECU obtains the emergency braking signal, a fifth flow adjustment assembly to be switched off, wherein one end of the fifth flow adjustment assembly is connected to the other end of the first flow adjustment assembly, and the other end of the fifth flow adjustment assembly is connected to the liquid outlet of the liquid storage kettle.

20. The control method according to any one of claims 13 to 19, wherein the obtaining, by an ECU, a braking signal comprises:
receiving, by the ECU, a displacement signal obtained by a pedal travel sensor in the pedal assembly; and
determining, by the ECU, the braking signal based on the displacement signal.

21. A vehicle, wherein the vehicle comprises a pedal feeling adjustment apparatus, and the pedal feeling adjustment apparatus is the pedal feeling adjustment apparatus described in any one of claims 1 to 12.
